# EUROPÄISCHE PATENTANMELDUNG

(11) **EP 4 624 679 A1**
(43) Veröffentlichungstag der Anmeldung: **01.10.2025**
(21) Anmeldenummer: 25165273.1
(22) Anmeldetag: 21.03.2025
(51) Int. Cl.: E02F 9/08, B60L 53/16, H01R 13/453

(54) **ELEKTRISCHE BAUMASCHINE**

(30) Priorität: 25.03.2024 AT 5004124 U
(71) Anmelder: Wacker Neuson Linz GmbH, 4063 Hörsching (AT)
(72) Erfinder: Neumayer, Christian, 4615 Holzhausen (AT); Pöcherstorfer, Leonhard, 4724 Neukirchen am Walde (AT)
(74) Vertreter: Hübscher & Partner Patentanwälte GmbH

(57) **Zusammenfassung**

Es wird eine elektrische Baumaschine (1) mit wenigstens einem Elektromotor zum Antreiben eines Fahrantriebs (2) und/oder eines Arbeitsaggregats (3), mit einem elektrischen Energiespeicher (4) zum Versorgen des Elektromotors mit elektrischer Energie und mit einer Ladeanschlussbuchse (5) zum Laden des Energiespeichers (4) vorgeschlagen, welcher Ladeanschlussbuchse (5) ein in einer Karosserie (6) angeordneter Deckel zur Ladebuchsenabdeckung zugeordnet ist. Um vorteilhafte Handhabungsverhältnisse zu schaffen, wird vorgeschlagen, dass der Deckel ein entlang einer karosserieoberflächenparallelen Schiebeführung (7) zwischen einer Schließstellung und einer Offenstellung verlagerbarer Schiebedeckel (8) ist.

## Beschreibung

Die Erfindung bezieht sich auf eine Elektrische Baumaschine mit wenigstens einem Elektromotor zum Antreiben eines Fahrantriebs und/oder eines Arbeitsaggregats, mit einem elektrischen Energiespeicher zum Versorgen des Elektromotors mit elektrischer Energie und mit einer Ladeanschlussbuchse zum Laden des Energiespeichers, welcher Ladeanschlussbuchse ein in einer Karosserie angeordneter Deckel zur Ladebuchsenabdeckung zugeordnet ist.

Für beengte Baustelleneinsätze entwickeln sich die Bestrebungen dahingehend, möglichst kompakte Baumaschinen zu entwickeln. Aus dem Stand der Technik (EP4306724A1) sind hierzu elektrische hecküberstandsfreie Baumaschinen, beispielsweise Zero Tail Bagger, bekannt. Damit der Oberwagen der Baumaschine ausreichend kompakt ausgebildet werden kann, sind die Rotationsachse des Elektromotors und die Längsachse der hydraulischen Pumpe parallel zu einer Hochachse, also stehend angeordnet. Auf diese Weise kann die Höhe des Oberwagens zugunsten einer kompakten Länge und Breite des Oberwagens ausgenutzt werden. Nachteilig daran ist allerdings, dass sich dadurch Einschränkungen hinsichtlich der freien Ausrichtung des Elektromotors sowie der hydraulischen Pumpe ergeben, was zu Sonderausführungen dieser Komponenten und aufwendigen Kontaktierungen und Verlegungen der Hydraulikleitungen führen kann.

Zum Laden des Akkus einer elektrischen Baumaschine ist eine Ladeanschlussbuchse an der Maschine vorgesehen, an die ein Ladekabel angeschlossen werden kann. Die Ladeanschlussbuchse muss im Baustellenbetrieb vor Schmutz und Beschädigungen geschützt werden. Bisherige Lösungen verwenden entweder keine Abdeckung oder einfache Klappdeckel die analog zu herkömmlichen Tankdeckeln mit einem Scharnier an der Karosserie angeschlagen sind. Die bekannten Lösungen bedingen also entweder keinen Schutz der Ladeanschlussbuchse vor Umwelteinwirkung oder vor Beschädigungen des geöffneten Klappdeckels in Folge eines zusätzlichen Hecküberstands. Klappdeckel müssen im Betrieb zudem immer in geöffneter/geschlossener Position arretiert werden. Durch eine Drehbewegung von Baumaschinen, insbesondere bei Baggern, dies zu Beschädigungen od. Verletzungen führen sollte sich die Arretierung lösen und der Klappdeckel im Betrieb frei über das Heck der Baumaschine hinaus herumschwingen.

Der Erfindung liegt somit die Aufgabe zugrunde, eine Ladebuchsenabdeckung für eine elektrische Baumaschine der eingangs geschilderten Art zu schaffen, von der im Betrieb keine Beschädigungs- bzw.Verletzungsgefahr durch herumschwingen ausgeht.

Die Erfindung löst die gestellte Aufgabe dadurch, dass der Deckel ein entlang einer karosserieoberflächenparallelen Schiebeführung zwischen einer Schließstellung und einer Offenstellung verlagerbarer Schiebedeckel ist.

Damit kann die bei geöffnetem Schiebedeckel freiliegende Ladebuchse, insbesondere Ladeschnittstelle, Schalter u. dgl., vor äußeren Einwirkungen durch die Umwelt bzw. auch gegen Vandalismus geschützt werden. Zudem wird das Problem gelöst einen Verschlussmechanismus derart in die Karosserie zu integrieren, dass der Deckel nicht über den Arbeitsradius der Maschine hinausragt und der bei fehlerhafter Bedienung nicht beschädigt werden kann. Bei Bedarf kann Baumaschine auch mit angestecktem Ladekabel betrieben werden. Die Zugänglichkeit zur Ladebuchse von außen kann damit ohne ein etwaiges Öffnen eines Karosserieteiles, wie einer Abdeckhaube, insbesondere einer Motorhaube, gewährleistet werden. Dadurch, dass der Deckel ein entlang einer karosserieoberflächenparallelen Schiebeführung, insbesondere horizontal, zwischen einer Schließstellung und einer Offenstellung verlagerbarer Schiebedeckel ist, wird sichergestellt, dass der Deckel in keiner Verschiebelage über die Karosserie vorsteht.

Um den Schiebedeckel wenigstens in seinen beiden Endlagen vorteilhaft gegen ein freies Herumgleiten in der Schiebeführung im Arbeitsbetrieb sichern zu können, kann dem Schiebedeckel und der Schiebeführung eine Rastfeder zugeordnet sein, die sowohl in der Schließstellung als auch in der Offenstellung mit einem entsprechenden Gegenstück verrastet. Entweder kann die Rastfeder der Schiebeführung zugeordnet sein und an einem entsprechenden Gegenstück des Schiebedeckels verrasten oder aber die Rastfeder ist dem Schiebedeckel zugeordnet sein und verrastet an einem entsprechenden Gegenstück der Schiebeführung bzw. Karosserie.

Dazu kann die Schiebeführung eine Nut umfassen, in welcher der Schiebedeckel zur Verlagerung zwischen Schließstellung und Offenstellung verschiebbar geführt ist. Die Schiebetür gleitet dabei in der Nut in einer Führungsschiene und wird in den Endpositionen durch ein entsprechend geformtes Federstahlband gehalten. Die Schiebeführung kann eine Geradführung sein, oder eine Führung, welche der Kontur, beispielsweise einem Kreisbogen, der Karosserie folgt.

Besonders vorteilhaft ist es, wenn zwischen Nut und Schiebedeckel Bürsten angeordnet sind, die als Führungslager für den Schiebedeckel dienen und welche ein starkes Verschmutzen und damit ein Festfressen des Schiebedeckels in der Schiebeführung verhindern. Die Bürste(n) können in die Nut der Führungsschiene eingesetzt oder auf den freien Führungsrand des Schiebedeckels aufgesetzt sein. Die Sicherung der Bürsten am zugeordneten Bauteil erfolgt wahlweise durch Klemmung, Verrastung, Verklebung, Verschraubung, Vernietung od. dgl..

Ist die Nut beiderends offen, also die Führungsschiene links und rechts stirnseitig geöffnet, so kann eventuell in die Nut eingedrungene Verschmutzung beiderends entlang der Nut aus der Führungsschiene ausgeschoben bzw. ausgebürstet werden.

Der Schiebedeckel kann insbesondere bei Baggern, wie auch bei Radladern genutzt werden. Der Schiebedeckel ist vorzugsweise in einer, insbesondere aufschwenkbaren, Abdeckhaube angeordnet, die bei geöffnetem Zustand freien Zugang zu Motorraum, Akku, Ladekonsole u.dgl. geben kann. Zudem kann der Schiebedeckel entlang einer karosserieoberflächenparallelen der Karosserieinnenfläche, hier also der Abdeckhaubeninnenfläche, zugeordneten Schiebeführung zwischen Schließstellung und Offenstellung verlagerbar Schiebedeckel sein. Der Schiebedeckel ist somit stets innerhalb der Kontur der Baumaschine angeordnet und ragt nicht über die Karosserie hinaus, womit auch bei einem Öffnen der Abdeckhaube auf die Schiebedeckellage keine Rücksicht genommen werden muss.

Ist dem Schiebedeckel zwecks einfacherer Handhabung ein Griff zugeordnet, so ist dieser insbesondere ebenfalls innerhalb einer Einhüllenden der Karosserie angeordnet und ragt nicht über die Karosserie hinaus.

Ist der Schiebedeckel im Heck der Baumaschine angeordnet, so kann die Baumaschine, wenn auch eingeschränkt, während eines Ladevorganges betrieben werden.

Zur Vermeidung unbefugten Zugriffes zur Ladebuchse kann der Schiebedeckel in seiner Schließstellung mit einem Deckelschloss versperrbar sein. Ebenso kann der der Ladeanschlussbuchse ein Ladesteckerschloss zugeordnet sein, um ein unbefugtes Abstecken eines Ladekabels während eines Ladezyklus zu vermeiden.

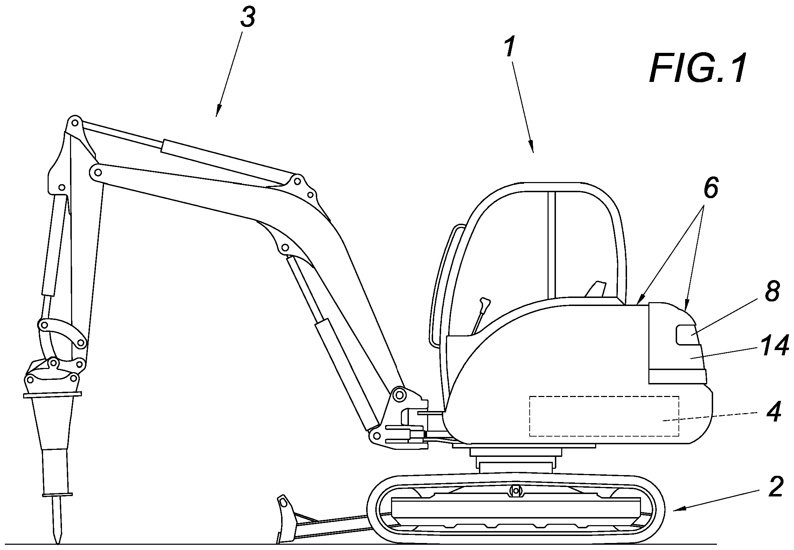

In der Zeichnung ist der Erfindungsgegenstand beispielsweise dargestellt. Es zeigen
- Fig. 1: eine elektrische Baumaschine in Seitenansicht,
- Fig. 2: eine Ansicht auf einen vergrößerten Ausschnitt des Hecks mit geöffnetem Schiebedeckel,

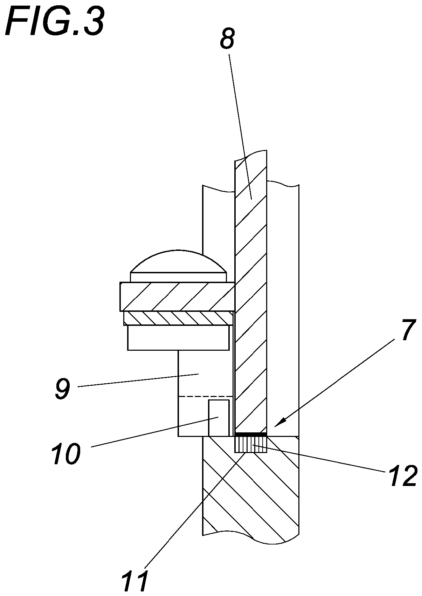

- Fig. 3: einen vergrößerten Querschnitt der Schiebeführung im Schnitt nach der Linie III-III aus Fig. 2 und
- Fig. 4: die Ansicht aus Fig. 2 mit geschlossenem Schiebedeckel.

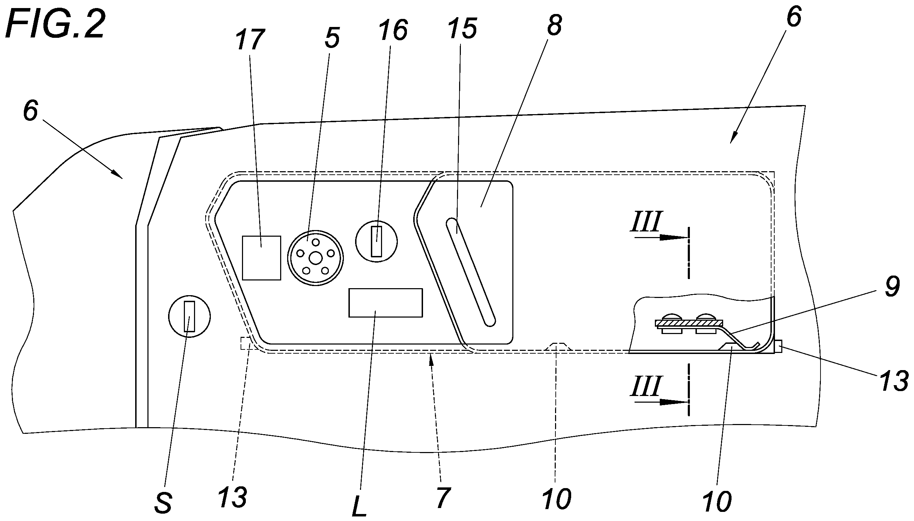

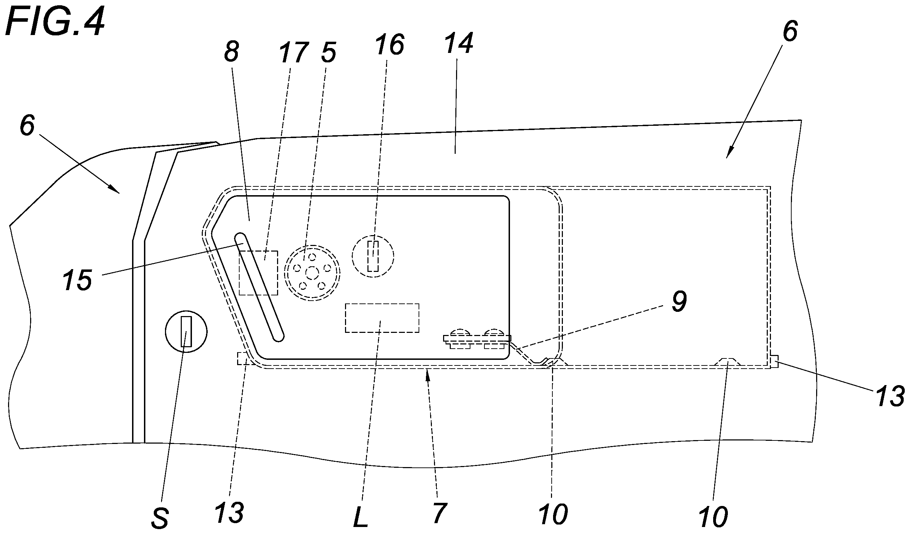

Die elektrische Baumaschine 1 umfasst wenigstens einen Elektromotor zum Antreiben eines Fahrantriebs 2 und/oder eines Arbeitsaggregats 3, einen elektrischen Energiespeicher 4 zum Versorgen des Elektromotors mit elektrischer Energie und mit einer Ladeanschlussbuchse 5 zum Laden des Energiespeichers 4, welcher Ladeanschlussbuchse 5 ein in einer Karosserie 6 angeordneter Deckel zur Ladebuchsenabdeckung zugeordnet ist. Der Deckel ist ein entlang einer karosserieoberflächenparallelen Schiebeführung 7 zwischen einer Schließstellung (Fig. 4) und einer Offenstellung (Fig. 2) verlagerbarer Schiebedeckel 8. Der Schiebedeckel 8 ist entlang einer karosserieoberflächenparallelen der Karosserieinnenfläche zugeordneten Schiebeführung 7 zwischen Schließstellung und Offenstellung verlagerbar.

Schiebedeckel 8 und Schiebeführung 7 ist eine Rastfeder 9 zugeordnet, die sowohl in der Schließstellung als auch in der Offenstellung mit einem entsprechenden Gegenstück 10 verrastet. Im Ausführungsbeispiel ist die Rastfeder 9 am Schiebedeckel 8 angeordnet und verrastet die Rastfeder 9 in der Schließstellung und der Offenstellung mit einem im Bereich der Schiebeführung 7 angeordneten Gegenstück 10.

Die Schiebeführung 7 umfasst eine Nut 11 umfasst, in welcher der Schiebedeckel 8 geführt ist.

Zwischen Nut 11 und Schiebedeckel 8 können Bürsten 12 angeordnet sein, die im dargestellten Ausführungsbeispiel am Schiebedeckelrand von diesem frei abragend befestigt sind. Die Nut 11 ist vorzugsweise beiderends offen, bildet also im Wesentlichen einen Auskehrschlitz 13 zum Auskehren von in die Nut 11 eingedrungenen Verunreinigungen aus.

Der Schiebedeckel 8 kann in einer, insbesondere aufschwenkbaren, Abdeckhaube 14 angeordnet sein und einen Griff 15 aufweisen, der innerhalb einer Einhüllenden der Karosserie 6 angeordnet ist. Der Schiebedeckel 8 ist insbesondere im Heck der Baumaschine angeordnet und in seiner Schließstellung mit einem Deckelschloss S versperrbar. Auch der Ladeanschlussbuchse 5 kann ein Ladesteckerschloss 16 zugeordnet sein.

Direkt links angrenzend an die Ladeanschlussbuchse 5 kann sich eine Vertiefung 17 befinden, die zur Aufnahme eines Schutzdeckels eines Ladesteckers dient. Manche Ladestecker bzw. Ladekabel besitzen einen Schutzdeckel, um im ungenutzten Zustand die Kontakte abzudecken und so vor Feuchtigkeit, Verschmutzung und direktem Zugriff zu schützen. Der um insbesondere rund 90° aufgeschwenkte Schutzdeckel kann beim Anstecken des Ladesteckers an die Ladeanschlussbuchse 5 in die Vertiefung 17 eingeschoben werden. Schutzdeckel besitzen häufig auch eine Kontur, die ein unbeabsichtigtes Abziehen des Ladesteckers von der Ladeanschlussbuchse 5 verhindert. Deshalb kann in der Vertiefung 17 eine Gegenkontur sitzen, um den Deckel bei vollständig angestecktem Ladestecker in der Vertiefung 17 einrasten zu lassen. So wir einerseits ein korrekter Sitz des Ladekabels sichergestellt und andererseits eine Sicherung gegen ungewolltes Abziehen erreicht.

Das Deckelschloss S kann auch mit einer Zentralverriegelung der Baumaschine 1 verbunden sein, um sowohl den Zugang zur Kabine zu entsperren, als auch den Schiebedeckel 8. Als Weiterentwicklung ist denkbar, dass die Zentralverriegelung bzw. eine Fernsteuerung den Schiebedeckel auch aktiv öffnen/schließen kann, beispielsweise mit einem entsprechenden elektrischen Antrieb der Ladeklappe.

Hinter der Schiebetür befindet sich auch die Ladezustandsanzeige L / Statusanzeige des Akkus.

## Patentansprüche

1. Elektrische Baumaschine (1) mit wenigstens einem Elektromotor zum Antreiben eines Fahrantriebs (2) und/oder eines Arbeitsaggregats (3), mit einem elektrischen Energiespeicher (4) zum Versorgen des Elektromotors mit elektrischer Energie und mit einer Ladeanschlussbuchse (5) zum Laden des Energiespeichers (4), welcher Ladeanschlussbuchse (5) ein in einer Karosserie (6) angeordneter Deckel zur Ladebuchsenabdeckung zugeordnet ist, **dadurch gekennzeichnet, dass** der Deckel ein entlang einer karosserieoberflächenparallelen Schiebeführung (7) zwischen einer Schließstellung und einer Offenstellung verlagerbarer Schiebedeckel (8) ist.

2. Elektrische Baumaschine nach Anspruch 1, **dadurch gekennzeichnet, dass** Schiebedeckel (8) und Schiebeführung (7) eine Rastfeder (9) zugeordnet ist, die sowohl in der Schließstellung als auch in der Offenstellung mit einem entsprechenden Gegenstück (10) verrastet.

3. Elektrische Baumaschine nach Anspruch 1 oder 2, **dadurch gekennzeichnet, dass** die Schiebeführung (7) eine Nut (11) umfasst, in welcher der Schiebedeckel (8) geführt ist.

4. Elektrische Baumaschine nach Anspruch 3, **dadurch gekennzeichnet, dass** zwischen Nut (11) und Schiebedeckel (8) Bürsten (12) angeordnet sind.

5. Elektrische Baumaschine nach Anspruch 3 oder 4 **dadurch gekennzeichnet, dass** die Nut (11) beiderends offen ist.

6. Elektrische Baumaschine nach einem der Ansprüche 1 bis 5, **dadurch gekennzeichnet, dass** der Schiebedeckel (8) in einer, insbesondere aufschwenkbaren, Abdeckhaube (14) angeordnet ist.

7. Elektrische Baumaschine nach einem der Ansprüche 1 bis 6, **dadurch gekennzeichnet, dass** dem Schiebedeckel (8) ein Griff (15) zugeordnet ist, der innerhalb einer Einhüllenden der Karosserie (6) angeordnet ist.

8. Elektrische Baumaschine nach einem der Ansprüche 1 bis 7, **dadurch gekennzeichnet, dass** der Schiebedeckel (8) im Heck der Baumaschine angeordnet ist.

9. Elektrische Baumaschine nach einem der Ansprüche 1 bis 8, **dadurch gekennzeichnet, dass** der Schiebedeckel (8) in seiner Schließstellung mit einem Deckelschloss (S) versperrbar ist.

10. Elektrische Baumaschine nach einem der Ansprüche 1 bis 9, **dadurch gekennzeichnet, dass** der Ladeanschlussbuchse (5) ein Ladesteckerschloss (16) zugeordnet ist.
